# EUROPEAN PATENT SPECIFICATION

(11) **EP 4 491 016 B1**
(45) Date of publication and mention of the grant of the patent: **04.02.2026**
(21) Application number: 24187858.6
(22) Date of filing: 10.07.2024
(51) Int. Cl.: G01D 5/14, G01P 3/487, A01K 97/12

(54) **FISHING DEVICE**
ANGELVORRICHTUNG
DISPOSITIF DE PÊCHE

(30) Priority: 10.07.2023 GB 202310560
(43) Date of publication of application: 15.01.2025
(73) Proprietor: Korda Developments Limited, Basildon, Essex SS14 0HW (GB)
(72) Inventor: Dilliway, Chris, Hornchurch, RM12 ATY (GB); Coombes, Neil John, Romford, RM5 2UL (GB)
(74) Representative: Burnett, Christopher James

(56) References cited:
- EP-A1- 3 695 719
- GB-A- 2 149 631
- GB-A- 2 209 261
- US-B2- 8 602 343

## Description

This invention is a bite alarm for use in fishing.

Bite alarms are used in fishing to notify an angler that a fish has taken the bait on the end of a fishing line. Anglers may be using a plurality of fishing rods, or may be sat away from the fishing rod, so will not necessarily be able to tell if a fish is biting. Bite alarms operate by detecting fishing line movement and triggering an audio or visual indication to alert the angler.

The are three main types of prior art fishing bite alarms. A first group attach directly to the fishing rod, a second group are suspended from the fishing line, and a third group form part of the fishing rod's rest or support mechanism. Each type of bite alarm will generally detect line movement or vibration.

The third group of rod rest-mounted fishing bite alarms can be subdivided into three types: those that measure vibration or create vibration from line movement, those that measure line tension, and those that use a roller wheel which translates longitudinal line movements into roller rotation.

Roller wheel-based, rod rest-mounted fishing bite alarms detect incremental movement of a roller which is in contact with the fishing line. These alarms either use an on/off device with one or more sensor to produce a series of quadrature encoded pulses to detect rotational speed and direction or those that produce an analogue voltage proportional to the angular velocity of the roller.

Increments of longitudinal fishing line movement are optionally scaled down by a sensitivity factor and so the alarm is activated when a threshold length of fishing line is pulled through the alarm. To be effective, bite alarms need to be sufficiently sensitive in order to detect or pre-empt so-called "shy" or small movement bites, yet not be so sensitive that they are set off by false positive line movements not caused by fish.

The ability to alter the range of sensitivity of detection is of key interest to the angler. In particular, the angler may want to increase or decrease the sensitivity based on various circumstances, such as weather and water conditions. The type of sensor and its application are key factors that determine the sensitivity and sensitivity range of a bite alarm. Many types of sensor have been employed to detect fishing line movement. These sensors include optical LED, contact piezoelectric bimorphs, magnetic reed switches or hall effect sensors or a combination thereof. A plurality of sensors may be provided on a single bite alarm to provide the functionality required. Hall effect sensors as previously used detect only the presence of a magnet and suffer from poor battery life and are affected by temperature changes.

Activation of the alarm will typically produce an audio-visual response either locally at the alarm or at a remote transceiver. Each alarm activation typically comprises a short audio tone. As a fish takes the bait, it pulls the fishing line and when line pull rates increase, so does the resultant rate of audio tone.

Bite alarms will preferably use minimal electrical power to prolong battery life, will operate quickly to communicate a bite to the angler in real time, and exhibit no line drag that could be detected by the fish. Additionally, bite alarms will preferably have continuous contact with the line, be highly configurable and adjust to a variety of environments and target species, work repeatably, reliably and be sufficiently robust to withstand all weathers and physical abuse that is typical for such apparatus and be easy to manufacture.

Since the angler may be positioned a distance away from their fishing rod(s) and alarm(s), a method of receiving notification of line movement from a remotely positioned unit is preferred. Such remote units need to receive signals reliably from all paired alarms in an environment where topology and vegetation density can make rf communications challenging.

Prior art alarms may address some of the above requirements but have a number of drawbacks.

For example, roller wheels for detecting line movement are typically of a small diameter to increase detection sensitivity but at the cost of increased rotational friction and, through the resultant reduction in line contact area, an increased likelihood of line skip. Roller wheels may be linked to a DC motor as a generator but this method suffers from increased torque caused by eddy currents within the motor and also compromises the environmental sealing of a directly coupled motor. Usually, bite alarms that include a roller wheel use hall or reed switches in a quadrature encoding arrangement to detect line movement and direction. Being substantially digital in nature, these bite alarms require either magnetisation of a magnet in multiple directions or, as is more prevalent, multiple magnets are utilised to increase sensitivity. These bite alarms are complex to manufacture, places limitation on size verses sensing distance and ultimately exhibit an inherent compromise on number of sensitivity settings available where sensitivity is the result of scaling down by *n,* where *n* is the number of magnets. In particular, prior art bite alarms may comprise a roller wheel comprising multiple magnets arranged therearound, which will be detected as each magnet passes a sensor. The magnets will be arranged so that a single pole of the magnet is positioned for detection by the sensor. Additionally, two sensors are required to detect rotational direction. Angular movement and vibration which results in anything other than forward or backward movement of the fishing line can go undetected. The sensitivity of the roller wheel is then determined by the distance between adjacent magnets as well as the diameter of the wheel, and a smaller wheel is therefore more sensitive. Reducing the size of the roller wheel too much however causes line skip, and there is a limit to how close the magnets can be placed before they start interfering with each other. Sensitivity can only be stepped up or down by the alarms ignoring or including detection of one or more magnets.

A prior bite alarm is described in EP 3695719 A1 which describes a magnet mounted to a wheel which in use is in contact with a fishing line. The magnet is disposed opposite a sensor, specifically a tunnel magnetoresistance sensor, to determine rotation of the wheel and as such any movement of the fishing the line. However, tunnel magnetoresistance sensors suffer permanent degradation in the presence of strong magnetic fields. Such strong magnetic fields are frequently present in numerous devices mounted to fishing rods, in the form of magnetic butt rests, or in carp fishing in the form of so-called Zig magnets and bank stick quick couplers.

A further prior art device is described in US 5321391A which comprises two on/off hall effect sensors to determine the direction of travel of a wheel. Depending on which one of the two sensors is switched first determines the direction of travel detected. However, there are a number of drawbacks with this regarding angular measurement. Firstly, proper alignment requires enough PCB area to properly place both sensors at a reasonable distance from the magnet. This distance will have a direct impact on the mechanics of the design within any target application. Any two-sensor solution will require enough physical space to place both sensors at the selected range. At this distance, even small changes in mechanical spacing can have a significant impact on the observed magnitude. Any mismatch in spacing of the two sensors will lead to errors

Secondly, it is important to account for device sensitivity variations. Consider a sensor with maximum sensitivity error of ±5%. Due to manufacturing tolerances there exists a problem with errors in calculating respective angles due to a sensitivity mismatch between the two sensors. It is normal to expect in any system that there will be additional errors in magnet alignment and centring that may result in offset, wobble, or tilt. Alignment errors in assembly may impact the 90° spacing between sensors, or the physical assemblies may not be perfectly aligned.

The present invention addresses many of the drawbacks of prior art bite alarms.

Therefore, according to the present invention, and as claimed in independent claim 1, there is provided a bite alarm for use in fishing comprising: a housing; a sensor comprising a multi-axis linear hall effect sensor; a roller comprising a magnet, the magnet and roller being arranged so as to be rotatable coaxially relative to the sensor, the roller being contactable by a fishing line in use, wherein longitudinal movement of the fishing line causes rotation of the roller and magnet relative to the sensor, and wherein the position of the roller and both poles of the magnet are continuously detectable by the sensor; the sensor and roller being disposed within the housing; an alarm in communication with the sensor, and wherein a change of position of the roller relative to the sensor activates the alarm.

Advantageously, the use of a multi-axis linear hall effect sensor provides effectively limitless configurable sensitivity of longitudinal line movement through the measurement of the roller's absolute rotational angle since a multi-axis linear hall effect sensor detects magnetic flux lines. This in in contrast to prior art bite alarms where the presence or absence of multiple magnets are detected. The present invention can therefore detect real time position of the magnet relative to the sensor, which will produce an analogue signal, rather than a digital reading of multiple magnets detected by a sensor. As such, the use of a multi-axis linear hall effect sensor allows for the bite alarm to communicate the true line movement of the fishing rod to the angler. This may allow the user to make a decision as to whether the line movement constitutes a bite or not, allowing the skill and experience of the angler to take precedence over an alarm which decides if there is a bite or not.

The use of a multi-axis linear hall effect sensor is advantageous in contrast to tunnel magnetoresistance sensors in that multi-axis linear hall effect sensors are not permanently impacted by strong magnetic fields. Furthermore, multi-axis linear hall effect sensors have excellent battery life compared to other types of hall effect sensor as previously described.

The use of a multi-axis linear hall effect sensor is further advantageous in contrast to a standard hall effect sensor in that a standard hall effect sensor is only capable of detecting the component of the magnetic flux density, or B-Field, which is normal to the face of the device, acting as an on / off switch. The use of a multi-axis linear hall effect sensor is advantageous in contrast to a pair of hall effect sensors in that multi-axis linear hall effect sensors are not on / off switches, they are capable of detecting each line of magnetic flux and its position in relation to the sensor and by using trigonometry can establish a position, effectively sensing the angle of the magnet.

The use of a multi-axis linear hall effect sensor is further advantageous in contrast to tunnel magnetoresistance sensors, hall effect sensors, and a pair of hall effect sensors in that it offers improved sealing. The angular sensing offered by the use of a multi-axis linear hall effect sensor reduces part count and mechanical complexity, allowing for improved packaging by moving the moving parts (such as the roller to which the fishing line is attached) to a separate part of the device to the sensor. As such, improved sealing is offered by the use of a multi-axis linear hall effect sensor by having a fully sealed enclosure for the sensor.

In a further advantage, the use of a multi-axis linear hall effect sensor also offers the possibility to replace potentiometers commonly uses to adjust volume, tone and sensitivity.

The potential sensitivity of the present invention is therefore significantly superior to that of prior art bite alarms. Bite alarms according to the present invention can comprise a larger diameter roller wheel than prior art bite alarms which avoids line skip, and a single magnet is used which eliminates the problem of interference.

The present sensor is disposed in the magnetic field of the magnet and is capable of detecting minute changes in the orientation of the magnetic flux lines produced by the magnet as the roller rotates or when minor angular changes occur. The sensor can detect a vibration that does not cause rotation of the roller.

Further, the sensor may be disposed in an enclosure. Further still, the enclosure may be at least partially sealed enclosure. Further still, the enclosure may be fully sealed. Further still, the roller may be disposed outside of the enclosure.

The roller may comprise a cylindrical or disc-shaped wheel and comprise a circumferential channel to receive the fishing line in use. The magnet may also be disc-shaped, ring shaped or toroidal.

The roller may further comprise an axial spindle extending from either side of the centre of the wheel, the spindle being rotatably disposed within the housing. One end of the spindle may comprise a bracket in which the magnet is disposed, an outer edge of the bracket being rotatably mounted in the housing. The sensor may be disposed in the housing adjacent the magnet. The bracket will preferably be cylindrical with a recess in which the magnet is disposed. The sensor may be sealed within the housing, where it will still be able to detect the magnetic field but also will be protected from the elements. Compared to prior art roller-wheel based bite alarms, the distance between the magnet and the sensor is less important because the electric field can still be detected across a range of distances whereas for prior art devices with multiple magnets the manufacturing tolerances are much tighter, making them harder to manufacture and more susceptible to damage.

The bite alarm may further comprise a microprocessor in communication with the sensor and alarm. The microprocessor may be used to configure the sensor such that it is optimised for the application such as optimising current consumption and filtering to reduce noise.

The hysteresis of the bite alarm can be altered by the user, so that an initial threshold for triggering an alarm can easily be adjusted. Pre-set programmes can be incorporated into the microprocessor for different conditions, such as calm, windy, etc, with different thresholds for triggering the alarm. The bite alarm may be provided with a switch or dial so that the hysteresis can be manually adjusted.

The sensor and roller are mounted in a housing. The housing may be attachable to or integrated within a rod rest. Such rod rests may generally be elongate with a first end that comprises a head that may include arms that are U-shaped or Y-shaped in which the rod will sit or be gripped in use, and a second end which may be inserted into the ground or connected to a stand. The housing may include bifurcated arms to define an area in which the rod will sit in use and an indentation leading to the roller in which the fishing line of the rod, in use, extends and contacts the roller. The housing may be made from metal or a rigid plastics material to withstand extremes of weather and damage from use.

The sensor may further comprise a temperature sensor for the purposes of frost detection to warn of freeze up conditions.

The alarm may comprise an audible alarm and/or a visual alarm and/or a haptic alarm. The audio alarm may comprise a speaker and the visual alarm may comprise one or more LED.

The bite alarm may further comprise a transceiver in communication with a remote alarm. The transceiver may be in communication with the microprocessor to communicate with the remote alarm to replicate alarm indications produced by the bite alarm. The transceiver will preferably be a radio transceiver and communicate with a transceiver of the remote device by communicating rf data packets.

The magnet may comprise two diametric poles. The magnet may be oriented in any fashion relative to the sensor, since the sensor is able to determine the spatial relationship with respect to the magnet.

According to a further aspect of the invention and to independent claim 9 there is provided a method of detecting movement of a fishing line by means of a bite alarm as specified above, the method comprising: sensing the position of a roller comprising a magnet, with a sensor comprising a multi-axis linear hall effect sensor, the magnet being arranged with both poles of the magnet being detectable by the sensor relative to the sensor and being continuously detectable by the sensor; sending a notification to an alarm when a change in the position of the magnet relative to the sensor is detected by the sensor; and activating the alarm in response to the notification.

The method may further comprise: calculating the position of the magnet relative to the sensor with a microprocessor, the microprocessor being in communication with the sensor and the alarm.

The method may further comprise: applying, with the microprocessor, a parameter integer scaling factor to the resolution of calculated roller angle.

The method may further comprise: creating, with the microprocessor, a data packet comprising alarm activation information; sending, from a transceiver, the data packet to a remote device having a transceiver and alarm; activating, with the data packet, the alarm of the remote device.

The method may further comprise: applying a time delay to the data packet, from the detection of the change of position of the magnet relative to the senor, to the alarm activation.

Prior art bite alarms may transmit data packets for each alarm activation so that a remote alarm can replicate the audio tone locally. Using single transceiver radio pair, only one message can be sent or received at any one time. Moreover, transmitting radio data fast severely impacts radio range, thereby compromising maximum beep rate. The present alarm may transmit multiple alarm activations in a single data packet.

So that it may be better understood, embodiments of the present invention will now be described in detail, but by way of example only, with reference to the following figures in which:
Figure 1 shows a schematic representation of a typical rod and bite alarm set up;
Figure 2 shows a schematic representation of the present alarm;
Figure 3 shows a schematic representation of a magnet and sensor where the magnet comprises diametric poles;
Figure 4 shows a front view of a bite alarm according to the present invention;
Figure 5 shows a perspective view of the bite alarm of Figure 4;
Figure 6 shows a top view of the bite alarm of Figures 4 and 5;
Figure 7 is a cross-sectional view of the bite alarm of Figures 4 to 6;
Figure 8 shows a cross-sectional view of a roller according to the present invention;
Figure 9a and 9b show a transfer characteristic of x and y axis magnetic field strength series;
Figure 10a shows the calculated roller angle;
Figure 10b shows a time domain chart;
Figure 11 shows a flow chart of the method according to the present invention;
Figures 12a and 12b shows further flow charts of the present invention;
Figures 13a to 13d show audio notification of line movement;
Figure 14 shows a timing chart;
Figure 15 shows a data series; and
Figure 16 shows examples of data packet.

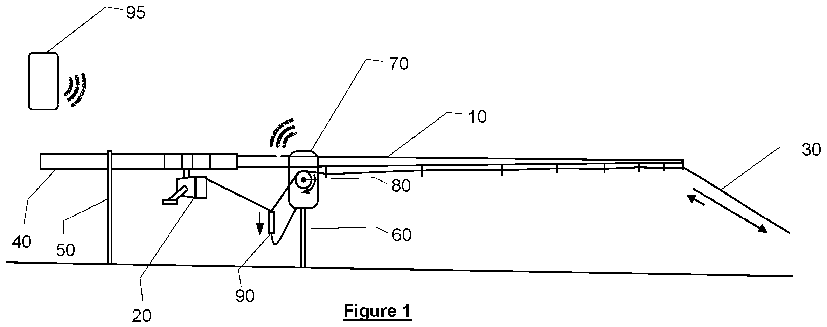

With reference first to Figure 1, there is shown a typical rod set up, incorporating a bite alarm which could include the present bite alarm. There is shown a fishing rod, generally indicated 10 comprising a reel generally indicated 20 and fishing line generally indicated 30. The rod 10 includes a handle 40 which is supported by a rod rest, generally indicated 50. The rod 10 is further supported by a further rod rest 60 which includes a bite alarm generally indicated 70. Bite alarm 70 comprises a rod support means such as a U-shaped groove or bifurcated arms (not shown) in which the rod 10 sits. Bite alarm 70 includes a roller wheel, generally indicated 80. Further, when the rod 10 is supported with the rod support means, the line 30 extends into the bite alarm 70 to contact the roller wheel 80. The line 30 is pretensioned with a clip-on bobbin 90.

The bite alarm 70 optionally includes a transceiver in communication with a remote device generally indicated 95. Both the bite alarm 70 and the remote device 95 contain an alarm which may be an audio or visual alarm, or combination of the two.

In use, a fish taking the bait at the end of the fishing line 30 (not shown) will pull the fishing line. Longitudinal movement of the line will cause the roller wheel 80 to rotate, where the rotation will activate the or each alarm.

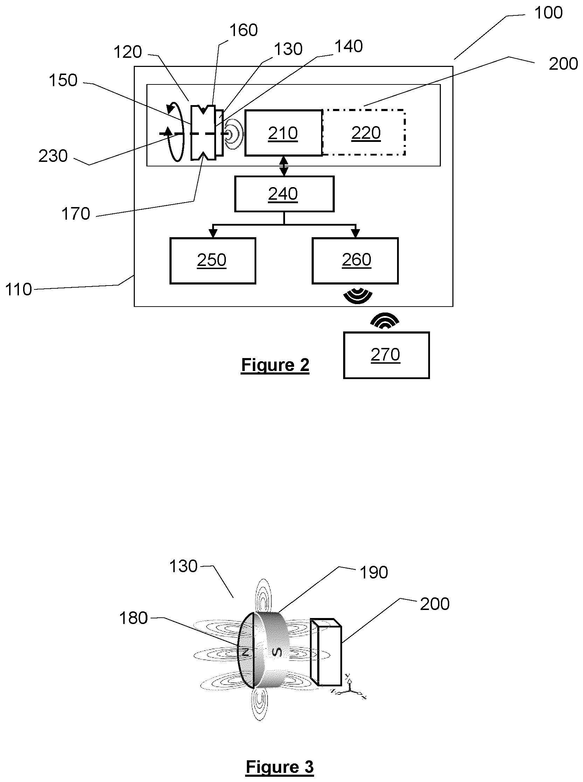

With reference to Figure 2, there is shown a schematic of a bite alarm, generally indicated 100, according to the present invention.

Bite alarm 100 comprises a housing 110 within which is disposed a roller wheel 120 and a magnet 130. Roller 120 is substantially disc-shaped with opposed flat surfaces 140,150 and a circumferential surface 160. Circumferential surface 160 includes a circumferential groove 170 for retaining a fishing line in use. Magnet 130 is bonded to flat surface 140 of the roller 120, or alternatively is bound to a spindle (not shown) which is part of the roller, wherein the spindle is rotatable with the roller 120 within the housing 110. Magnet 130 is disc shaped with two diametric poles, both of which are detectable by a sensor 200, as more clearly shown in Figure 3. Figure 3 shows magnet 130 with north pole 170 and south pole 180 and a schematic representation of the magnetic flux lines 190. The flux lines 190 from both poles of the magnet are continuously detected by the sensor 200, and so rotation of the magnet even by a very small degree, so lateral movement of the magnet caused by a vibration, will be detectable.

Disposed coaxially with the roller 120 and magnet 130 is the sensor generally indicated 200, comprising a multi-axis linear hall effect sensor 210 and an optional temperature sensor 220. The roller is mounted on a spindle (not shown) so as to rotate about an axis 230 which is perpendicular to the sensor 200, so that the angular position of the magnet relative to the sensor can be detected. The magnet 130 is continuously detectable by the sensor 200 so that the absolute position of the magnet 130 relative to the sensor 200 can be detected.

A microcontroller 240 is in communication with the sensor 200 and is also in communication with an alarm 250 and a transceiver 260. The data link between the microprocessor 240 and the sensor is an 12C interface. The alarm comprises either LEDs, to produce a visual alert, a speaker to produce an audible alert, or both. The transceiver 260 is coupled with a remote device generally indicated 270 which comprises a transceiver and an alarm, including one or both of LEDs and a speaker. One bite alarm 100 may be paired with multiple remote alarms, or one remote alarm could be paired with multiple bite alarms, such as when an angler has more than one rod in use at a time.

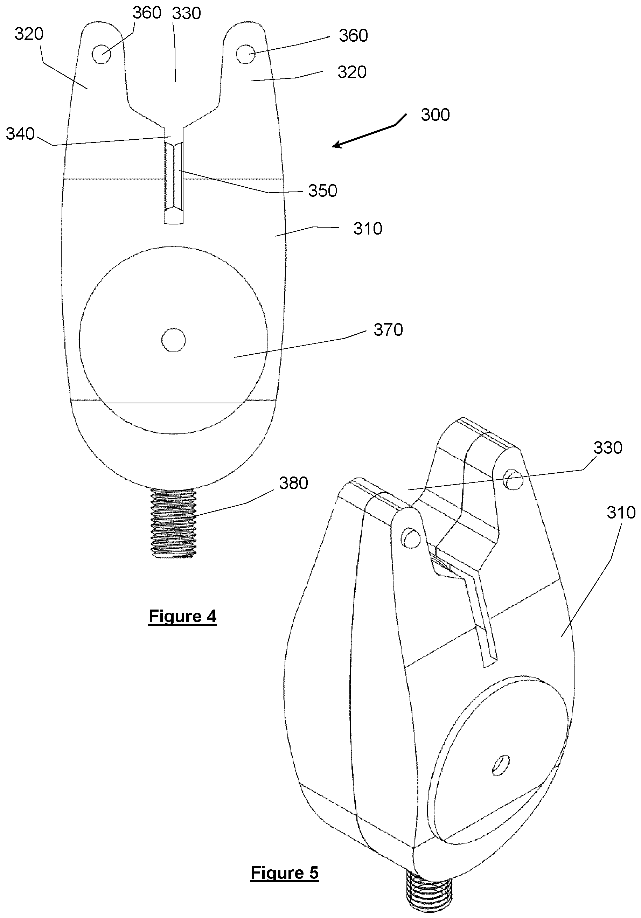

With reference to Figures 4 to 6, there is shown an embodiment of bite alarm generally indicated 300 which comprises a housing generally indicated 310. The housing 310 bifurcates into rod-support arms 320 which define an area 330 in which a rod sits in use. A slot 340 extends between the arms 320 in which is disposed a roller 350. The slot 340 is sufficiently wide to receive a fishing line in use. Positioned at the top of arms 320 are LEDs 360 for producing a visual signal of a line movement trigger and positioned at the front of the housing 310 is a speaker 370, for producing an audible signal of a line movement trigger. Disposed on the underside of the housing is a threaded rod 380 for attaching the bite alarm 300 to a rest.

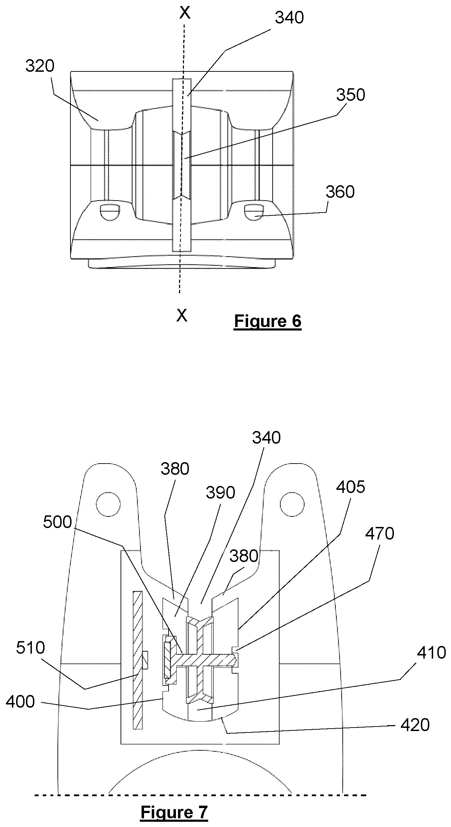

With reference now to Figure 7, there is shown a cross-sectional view of the bite alarm 300 taken through line X-X shown on Figure 6. Slot 340 is defined between angled members 380 which extend from the housing 310 at the base of arms 320. A chamber 390 is defined by the angled members 380, side walls 400, 405, back wall 410, a front wall (not shown) and base 420.

The roller 350 sits, and is rotatable within, the chamber 390.

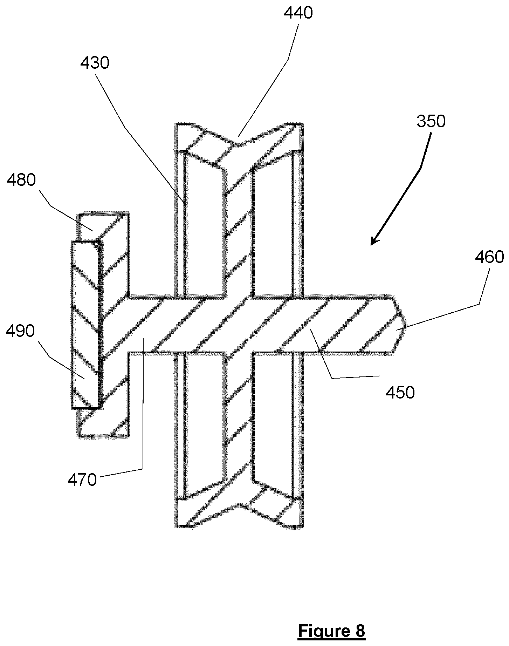

As most clearly shown in Figure 8, roller 350 comprises cylindrical wheel 430 having a grooved circumferential surface 440 for receiving a fishing line in use. An axial spindle 450, which is integral with the wheel 430, extends from both sides of the centre of the wheel 430. The spindle 450 comprises a tapered first end 460 which is received in a socket 470 in the wall 405 of the chamber 390 as shown in Figure 7. The other end 470 of the spindle 450 comprises a bracket 480 in which is disposed a diametric magnet 490. The bracket 480 is cylindrical and is rotatably received in a formation 500 in the wall 400 of the chamber 390. As shown in Figure 7, a sensor 510 is sealed in the wall 400 of the housing 310 and is positioned opposite from the magnet 490 so that the sensor 510 can continuously detect the magnetic field emanating from magnet 490. A microcontroller (not shown) may also be housed within the housing 310.

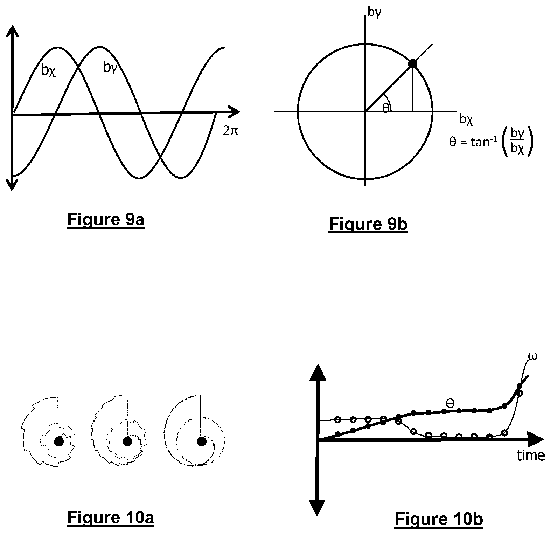

To illustrate the function of the present invention, Figure 9a shows a transfer characteristic of x and y axis magnetic field strength series plotted against angle for a full 360-degree angular rotation of the roller wheel 120,350 and magnet 130,490. Figure 9b shows the transfer characteristic in a plot of x magnetic field against y magnetic field. Using an arc tangent trigonometric function, the roller 120,350 angle may be calculated accurately with high resolution using either a mathematical function or look up table. This function is normally calculated within the microcontroller 240 or may be calculated directly in the sensor 200,510.

As shown in Figure 10a, the calculated roller angle could have a resolution of 10 bit, 1024 counts or 0.365 degrees or more. A resolution this high would be too sensitive for the needs of most anglers, so the microprocessor reduces the resolution by a parametrised integer scaling factor. Fig 10a graphically represents the resultant integer division for three scaling factor cases. This process defines the effective line pull distance per angular increment where 'n' is user selectable to set bite sensitivity. Figure 10b is a time domain chart showing the impact of line movement profile on the roller angle and its corresponding calculated angular velocity.

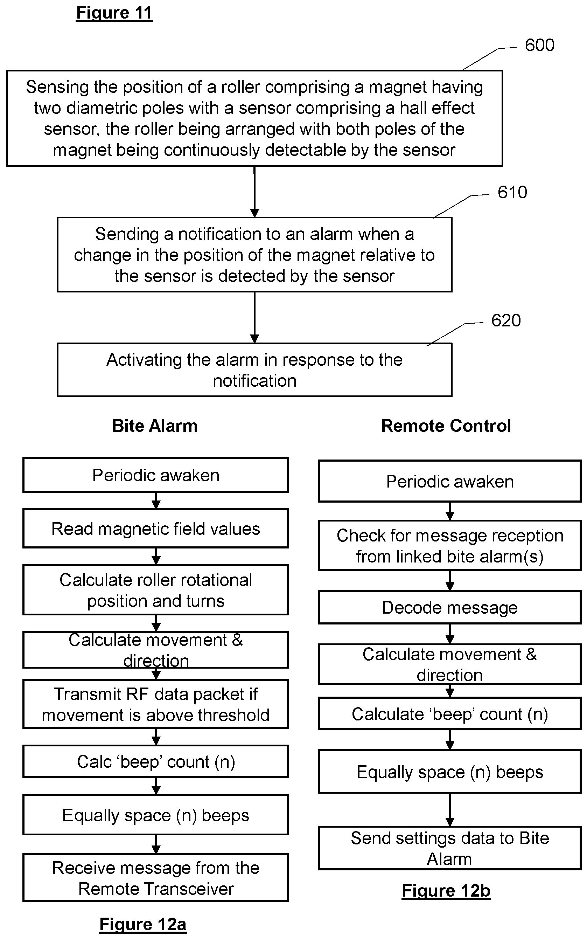

Figure 11 is a flow chart of the method of the present invention. At Step 600, the position of a roller comprising a magnet having two diametric poles with a sensor comprising a multi-axis linear hall effect sensor, the roller being arranged with both poles of the magnet being continuously detectable by the sensor, is sensed. At Step 610, a notification is sent to an alarm when a change in the position of the magnet relative to the sensor is detected by the sensor. At Step 620, the alarm is activated in response to the notification.

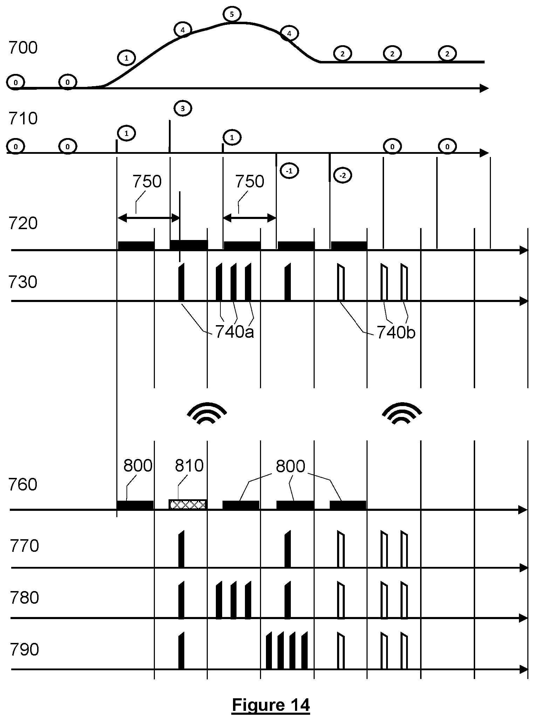

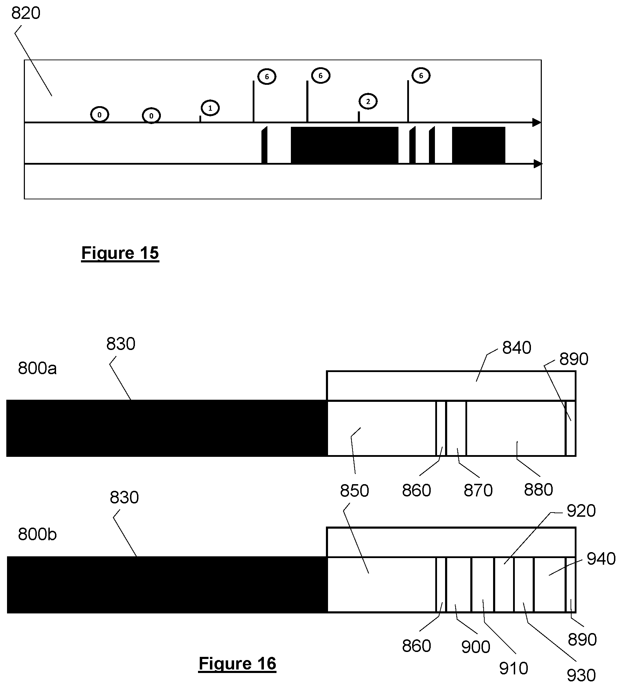

Figures 12a and 12b shows further flow charts of the basic software functionality of both the bite alarm (Figure 12a) and remote control (Figure 12b). Turning first to Figure 12a, to conserve battery consumption, the bite alarm 100 spends most of its time asleep or in a standby mode. Periodically, the bite alarm 100 awakens whereby the sensor 200 reads the magnetic field strengths from the magnet 130, and the roller position is calculated and scaled and in the event of a 0/360 degrees rollover, a rotations count variable is updated. If the updated roller position has shifted beyond a pre-set threshold, a data packet (see Figure.15) is transmitted. On completion of the message transfer, the movement (change in position) is converted to number of 'beeps', which are activations based on the amount of movement and which may translate into individual noise generations or flashes of light from the speaker and/or LEDs of the alarm. Beeps are set to occur uniformly over a transmit timing frame - see Figure 14.

Referring now to Figure 12b, the remote device 270 periodically awakens to check if there are any data packets ready to be received through detection of the transmission preamble (see Figure 15). Upon decoding the message header and confirming the message is from a paired alarm through ID matching, the roller movement is independently calculated, converted to number of 'beeps' and timed to occur uniformly over the timing frame - see Figure 14.

If the transceiver of the remote device 270 has an integrated user interface, it may also push settings back to the bite alarm 100. The alarm spends much of its time asleep or in a standby mode and therefore not may not be receptive to incoming messages. To solve this problem, the alarm goes into a mode where it stays awake for a period after a burst of movement so that the remote device 270 has an available window to back settings data.

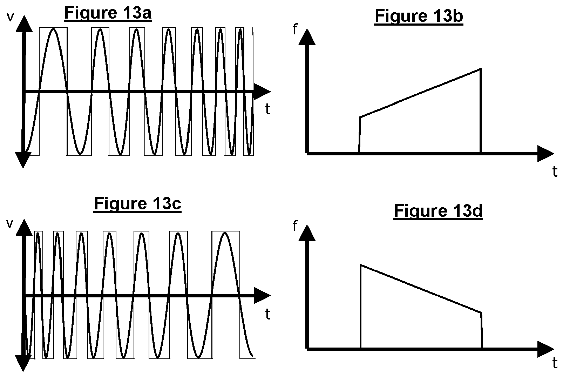

As shown in Figures 13a-d, rod rest-based bite alarms typically provide audio notification of line movement. Typically, audio notification is provided by fixed pulse length, fixed frequency tones with a repetition rate proportional to speed of line movement. Typically, the tone is pitch adjustable so that the angler can identify which of their rods has activity. For reverse line movement, also known as drop-back indication, tone and sometimes pulse duration is adjusted. Utilising change of audio tone for rod/alarm identification and direction discrimination is confusing and prone to miscommunication. With the present application, different so-called chirp sounds, which are sweep frequency tones, are utilised. Sweep frequency tones are inherently directional with upchirps (Figures 13a and b) and downchirps (Figures 13c and d) instantly recognisable to the human ear. Chirps provided by this invention provide clearly identifiable differentiation between pitch change for rod/alarm identification and up/down chirps for forward or backward line movements.

Figure 14 shows a timing chart to further explain the method of sampling magnet field strengths, calculation of angular velocity, transmission of data messages and alignment of alarm activations between the bite alarm 100 and remote device 270.

Data series 700 details a movement of the roller 120 which begins stationary, then rotates forward direction, then rotates partially back. The circled integer numbers are the calculated position of the roller 120 after resolution reduction - see Figure 9a. Series 710 is the sampled angular velocity and is generated from data series 700, whereby each sample corresponds to the difference between positions samples, for example sample *n* and sample n-1.

Data series 720 shows data packet transmission timings created by the microprocessor 240 of the bite alarm 100, where each packet is transmitted from the bite alarm 100 to the remote device 270 if the resultant sampled angular velocity of the roller wheel 120 of data series 710 is non-zero.

Data series 730 shows the timing of the alarm activation whereby the number of alarm activations 740a,740b are equally spaced within each sampled timing frame 750. In instances where the alarm activation is the result of forward movement of the fishing line and roller wheel 120, the alarm tone will rise in frequency as shown with activations 740a, and where the fishing line drops back and the roller wheel 120 reverses, the alarm tone will lower in frequency as shown with activations 740b. There is a delay between detection of line movement to the first alarm activation 740. This delay is provided so that the remote device 270 has sufficient time to schedule its alarm activations to be time aligned with the alarm activations of the bite alarm 100.

Data series 760, 770, 780, 790 are timings of the remote device 270 where data series 760 is the reception of transmitted data packets 800 from the transceiver 260 of the bite alarm 100. One data packet 810 has been lost or is otherwise invalid. Data series 770, 780, 790 show three different equally spaced alarm activation scenarios. In the case of data series 770, data packet 810 was lost, which lead to data loss of rotational velocity and resultant loss of an alarm activation indicating forward line movement. For the scenario shown in data series 280, data packet 810 was correctly read and as a result the alarm activation is exactly the same as that of the bite alarm 100 shown in data series 730. Lastly, for the scenario shown in data series 790, the reception of data packet 810 was lost, however in this instance the remote device 270 calculates rotational velocity independently to the bite alarm 100 and as a result computes four alarm activations 800 equally spaced in the next time frame. In this example, three of the alarm activations suffered delayed transmission. Delayed transmission of alarm activations is considered preferential to missing the alarm activations altogether.

As shown in data series 820 in Figure 15, when the rotational velocity count becomes too large to fit a number of alarm activations into a time frame, the microcontroller 240 will instruct the alarm to produce a long tone to signify the fish is moving fast. This is termed run mode.

Data packets 800 are shown in more detail in Figure 16. The data packet has two (or more) forms. Data packet 800a is created by the microprocessor 240 of the bite alarm 100 and is transmitted to the remote device 270. Data packet 800a comprises a preamble 830, and a data payload 840. The preamble 830 has an extended duration to guarantee the remote device 270 periodically awakens to identify radio activity. Payload 840 comprises a unique identifier 850, an instruction number 860, a sensitivity factor 870 so that scaling down by the correct ratio is guaranteed, and roller wheel 120 position information 880, including count of roller wheel 120 rotations, and a message checksum 890 to verify data integrity.

Data packet 800b comprises a collection of alarm settings. The data packet 800b comprises (though is not limited to) preamble 830, unique identifier 850 and message checksum 890 as with data packet 800a, and further comprises data in relation to the colour of visual bite indication LED 900, note (or tone) of the audio alarm 910, battery voltage 920, alarm temperature 930 and a bit field 940 containing alarm preferences, such as auto night dimming mode, night light active, ambient light level. Data packet 800b is bidirectional, so may be used not only to inform the remote device 270, but also to push settings back to the bite alarm 100, whereas data packet 800a is a unidirectional transmission of data to the remote device 270.

## Claims

1. A bite alarm (100, 300) for use in fishing comprising:
a housing (110, 310);
a sensor (210, 510) comprising a multi-axis linear hall effect sensor (210);
a roller (120, 350) comprising a magnet (130, 490), the magnet and roller being arranged so as to be rotatable coaxially relative to the sensor, the roller being contactable by a fishing line (30) in use, wherein longitudinal movement of the fishing line causes rotation of the roller and magnet relative to the sensor, and wherein the position of the roller and both poles of the magnet are continuously detectable by the sensor;
the sensor and roller being disposed within the housing;
an alarm (250) in communication with the sensor, wherein a change of position of the roller relative to the sensor activates the alarm.

2. A bite alarm as claimed in claim 1, wherein the roller (350) comprises disc-shaped wheel (430) that comprises a circumferential channel (440) to receive a fishing line.

3. A bite alarm as claimed in claim 2 wherein the roller further comprises an axial spindle (450) extending from either side of the centre of the wheel, the spindle being rotatably disposed within the housing (310).

4. A bite alarm as claimed in claim 3, wherein one end of the spindle comprises a bracket (480) in which the magnet (490) is disposed, an outer edge of the bracket being rotatably mounted in the housing, wherein the sensor (510) is disposed in the housing adjacent the magnet.

5. A bite alarm as claimed in any previous claim wherein the sensor is sealed within the housing.

6. A bite alarm as claimed in any preceding claim, wherein the sensor further comprises a temperature sensor (220).

7. A bite alarm as claimed in any previous claim, wherein the bite alarm further comprises a microprocessor (240) in communication with the sensor and alarm.

8. A bite alarm as claimed in any previous claim wherein the magnet (130) is disc shaped and comprises two diametric poles.

9. A method of detecting movement of a fishing line by means of a bite alarm according to claim 8,
the method comprising:
sensing the position of a roller comprising a disc shaped magnet having two diametric poles, with a sensor comprising a multi-axis linear hall effect sensor, the magnet being arranged with both magnetic poles being continuously detectable by the sensor;
sending a notification to an alarm when a change in the position of the magnet relative to the sensor is detected by the sensor; and
activating the alarm in response to the notification.

10. A method as claimed in claim 9, further comprising:
calculating the position of the magnet relative to the sensor with a microprocessor, the microprocessor being in communication with the sensor and the alarm.

11. A method as claimed in claim 10, further comprising:
applying, with the microprocessor, a parameter integer scaling factor to the resolution of calculated roller angle.

12. A method as claimed in claim 10 or claim 11 further comprising:
creating, with the microprocessor, a data packet comprising alarm activation information;
sending, from a transceiver, the data packet to a remote device having a transceiver and alarm;
activating, with the data packet, the alarm of the remote device.

13. A method as claimed in claim 12, further comprising:
applying a time delay to the data packet, from the detection of the change of position of the magnet relative to the sensor, to the alarm activation.

## Patentansprüche

1. Bissanzeiger (100, 300) zur Verwendung beim Angeln, Folgendes umfassend:
ein Gehäuse (110, 310);
einen Sensor (210, 510), der einen mehrachsigen linearen Halleffektsensor (210) umfasst;
eine Rolle (120, 350), die einen Magneten (130, 490) umfasst, wobei der Magnet und die Rolle so angeordnet sind, dass sie relativ zum Sensor koaxial drehbar sind, wobei die Rolle bei Gebrauch mit einer Angelschnur (30) in Kontakt gebracht werden kann, wobei eine Längsbewegung der Angelschnur eine Drehung der Rolle und des Magneten relativ zum Sensor bewirkt und wobei die Position der Rolle und beider Magnetpole durch den Sensor kontinuierlich erfasst werden kann;
wobei der Sensor und die Rolle im Gehäuse angeordnet sind;
einen Alarm (250), der mit dem Sensor in Verbindung steht, wobei eine Positionsänderung der Rolle relativ zum Sensor den Alarm aktiviert.

2. Bissanzeiger nach Anspruch 1, wobei die Rolle (350) ein scheibenförmiges Rad (430) umfasst, das einen umlaufenden Kanal (440) zur Aufnahme einer Angelschnur umfasst.

3. Bissanzeiger nach Anspruch 2, wobei die Rolle (450) ferner eine axiale Spindel umfasst, die sich beidseits der Radmitte erstreckt, wobei die Spindel drehbar im Gehäuse (310) angeordnet ist.

4. Bissanzeiger nach Anspruch 3, wobei ein Ende der Spindel eine Halterung (480) umfasst, in der der Magnet (490) angeordnet ist, wobei eine Außenkante der Halterung drehbar im Gehäuse angebracht ist, wobei der Sensor (510) im Gehäuse am Magneten angrenzend angeordnet ist.

5. Bissanzeiger nach einem der vorhergehenden Ansprüche, wobei der Sensor im Gehäuse versiegelt ist.

6. Bissanzeiger gemäß einem der vorhergehenden Ansprüche, wobei der Sensor ferner einen Temperatursensor (220) umfasst.

7. Bissanzeiger gemäß einem der vorhergehenden Ansprüche, wobei der Bissanzeiger ferner einen Mikroprozessor (240), der mit dem Sensor und dem Alarm in Verbindung steht, umfasst.

8. Bissanzeiger gemäß einem der vorhergehenden Ansprüche, wobei der Magnet scheibenförmig ist und zwei diametrale Pole umfasst.

9. Verfahren zur Erfassung der Bewegung einer Angelschnur mittels eines Bissanzeigers gemäß Anspruch 8, wobei das Verfahren Folgendes umfasst:
Abtastung der Position einer Rolle, die einen scheibenförmigen Magneten mit zwei diametralen Polen umfasst, mit einem Sensor, der einen mehrachsigen linearen Halleffektsensor umfasst, wobei der Magnet so angeordnet ist, dass beide Magnetpole kontinuierlich vom Sensor erfasst werden können;
Versand einer Benachrichtigung an einen Alarm, wenn eine Positionsänderung des Magneten relativ zum Sensor durch den Sensor erfasst wird; und
Aktivierung des Alarms als Reaktion auf die Benachrichtigung.

10. Verfahren nach Anspruch 9, das ferner Folgendes umfasst:
Berechnung der Magnetposition relativ zum Sensor mit einem Mikroprozessor, wobei der Mikroprozessor mit dem Sensor und dem Alarm in Verbindung steht.

11. Verfahren nach Anspruch 10, das ferner Folgendes umfasst:
Anwendung eines ganzzahligen Parameterskalierungsfaktors auf die Auflösung des berechneten Rollenwinkels mit dem Mikroprozessor.

12. Verfahren nach Anspruch 10 oder Anspruch 11, das ferner Folgendes umfasst:
Erstellung eines Datenpakets mit Alarmaktivierungsinformationen mit dem Mikroprozessor;
Versand des Datenpakets von einem Sendeempfänger an ein entferntes Gerät, das einen Sendeempfänger und einen Alarm aufweist;
Aktivierung des Alarms des entfernten Geräts mit dem Datenpaket.

13. Verfahren nach Anspruch 12, das ferner Folgendes umfasst:
Anwendung einer Zeitverzögerung auf das Datenpaket von der Erfassung der Positionsänderung des Magneten relativ zum Sensor bis zur Alarmauslösung.

## Revendications

1. Détecteur de touche (100, 300) destiné à être utilisé dans la pêche, comprenant :
un boîtier (110, 310) ;
un capteur (210, 510) comprenant un capteur à effet Hall linéaire multi-axes (210) ;
une roulette (120, 350) comprenant un aimant (130, 490), l'aimant et la roulette étant disposés de manière à pouvoir tourner coaxialement par rapport au capteur et la roulette pouvant entrer en contact avec une ligne de pêche (30) lors de l'utilisation ; dans laquelle le mouvement longitudinal de la ligne de pêche entraîne la rotation de la roulette et de l'aimant par rapport au capteur, et dans laquelle la position de la roulette et des deux pôles de l'aimant est détectable en continu par le capteur ;
le capteur et la roulette étant disposés à l'intérieur du boîtier ;
une alarme (250) en communication avec le capteur, dans laquelle un changement de position de la roulette par rapport au capteur active l'alarme.

2. Détecteur de touche selon la revendication 1, dans lequel la roulette (350) comprend une roue en forme de disque (430) incluant une gorge circonférentielle (440) pour recevoir une ligne de pêche.

3. Détecteur de touche selon la revendication 2, dans lequel la roulette (450) comprend également une broche axiale s'étendant de part et d'autre du centre de la roue, la broche étant disposée à rotation à l'intérieur du boîtier (310).

4. Détecteur de touche selon la revendication 3, dans lequel une extrémité de la broche comprend un support (480) où est disposé l'aimant (490), un bord extérieur du support étant monté à rotation dans le boîtier ; et dans lequel le capteur (510) est disposé dans le boîtier adjacent à l'aimant.

5. Détecteur de touche selon l'une quelconque des revendications précédentes, dans lequel le capteur est scellé à l'intérieur du boîtier.

6. Détecteur de touche selon l'une quelconque des revendications précédentes, dans lequel le capteur comprend en outre un capteur de température (220).

7. Détecteur de touche selon l'une quelconque des revendications précédentes, dans lequel le détecteur de touche comprend en outre un microprocesseur (240) en communication avec le capteur et l'alarme.

8. Détecteur de touche selon l'une quelconque des revendications précédentes, dans lequel l'aimant est en forme de disque et comprend deux pôles diamétralement opposés.

9. Procédé de détection de mouvement d'une ligne de pêche au moyen d'un détecteur de touche selon la revendication 8, le procédé comprenant :
la détection de la position d'une roulette comprenant un aimant en forme de disque avec deux pôles diamétralement opposés, avec un capteur comprenant un capteur à effet Hall linéaire multi-axes ; l'aimant étant disposé de telle sorte que les deux pôles magnétiques sont détectables en continu par le capteur ;
l'envoi d'une notification à une alarme lorsqu'un changement de la position de l'aimant par rapport au capteur est détecté par le capteur ; et
l'activation de l'alarme en réponse à la notification.

10. Procédé selon la revendication 9, comprenant en outre :
le calcul de la position de l'aimant par rapport au capteur à l'aide d'un microprocesseur, le microprocesseur étant en communication avec le capteur et l'alarme.

11. Procédé selon la revendication 10, comprenant en outre :
l'application, à l'aide du microprocesseur, d'un paramètre de facteur d'échelle entier à la résolution de l'angle calculé de la roulette.

12. Procédé selon la revendication 10 ou la revendication 11, comprenant en outre :
la création, à l'aide du microprocesseur, d'un paquet de données comprenant des informations sur l'activation de l'alarme ;
l'envoi, à l'aide d'un émetteur-récepteur, du paquet de données vers un dispositif à distance équipé d'un émetteur-récepteur et d'une alarme ;
l'activation, à l'aide du paquet de données, de l'alarme du dispositif à distance.

13. Procédé selon la revendication 12, comprenant en outre :
l'application d'un délai au paquet de données, entre la détection du changement de position de l'aimant par rapport au capteur et l'activation de l'alarme.
